# EUROPÄISCHE PATENTANMELDUNG

(11) **EP 2 123 388 A1**
(43) Veröffentlichungstag der Anmeldung: **25.11.2009**
(21) Anmeldenummer: 09006968.3
(22) Anmeldetag: 25.05.2009
(51) Int. Cl.: B23K 9/173, B23K 35/38, B23K 9/04

(54) **Verfahren zum Kurzschluss-Lichtbogenfügen unter Verwendung eines Gases umfassend 80 bis 95 % Vol. Kohlendioxid**

(30) Priorität: 23.05.2008 DE 102008024977; 04.08.2008 EP 08013941
(71) Anmelder: Linde AG, 80331 München (DE)
(72) Erfinder: Matz, Christoph, 85716 Unterschleissheim (DE); Wilhelm, Gerald, Dr., 85716 Unterschleissheim (DE)
(74) Vertreter: Schüssler, Andrea

(57) **Zusammenfassung**

Die Erfindung betrifft ein Verfahren zum Lichtbogenfügen eines Werkstücks unter einem Schutzgas mit einer abschmelzenden Elektrode unter Verwendung eines Kurzlichtbogens, bei weichem Material von der abschmelzenden Elektrode an das Werkstück unter Bildung eines geregelten Kurzschlusses übergeben wird. Erfindungsgemäß wird ein Schutzgas verwendet das aus 80 bis 95 Vol.-% CO₂ und 85 bis 90 Vol.-% CO₂ besteht.

## Beschreibung

Die vorliegende Erfindung betrifft ein Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines geregelten Kurzschlusses übergeben wird.

Das Lichtbogenfügen unter Schutzgas ist eine viel eingesetzte Fügetechnik. Dabei brennt ein Lichtbogen zwischen einer in einem Brenner angeordneten Elektrode und einem zu bearbeitenden Werkstück. Eine Schweißverbindung entsteht dabei durch ein Aufschmelzen des Grundwerkstoffs an der Bearbeitungsstelle im Lichtbogen und eine anschließende Wiedererstarrung des Werkstoffs. Wird eine abschmelzende Elektrode verwendet, geht das Material der Elektrode als Zusatzwerkstoff in die Schweißverbindung ein. Bei einer Hartlötverbindung entsteht die stoffflüssige Verbindung durch das geschmolzene und wieder erstarrte Löt, welches als Zusatzwerkstoff zugegeben wird. Der Grundwerkstoff wird dabei nicht aufgeschmolzen, vielmehr entsteht eine Verklammerung von Löt- und Grundwerkstoff. Beim Hartlöten mit Lichtbogen wird dazu meist eine abschmelzende Elektrode verwendet. Für den Übergang des Elektrodenmaterials gibt es unterschiedliche Varianten, die auch zu unterschiedlich brennenden Lichtbögen führen. So gibt es beispielsweise den Sprühlichtbogen, den Lichtbogen mit globularem Tröpfchenübergang, den rotierenden Lichtbogen mit Tröpfchenübergang und den Kurzlichtbogen.

Beim Kurzlichtbogen entsteht zwischen der Elektrode und dem Werkstück, welches als zweite Elektrode gepolt wird, während des Elektrodenwerkstoffübergangs, also wenn das flüssige oder teigige Material sich von der Elektrode zu lösen beginnt und sich eine Brücke zwischen Elektrode und Werkstück ausbildet ein elektrischer Kurzschluss. Durch den Kurzschluss wird der sich von der Elektrode abzulösen beginnende Tropfen abgeschnürt, worauf sich der Tropfen von der Elektrode löst. In dem elektrischen Feld, das nun nach Auflösung des Kurzschlusses wieder vorliegt, entzündet sich der Lichtbogen wieder. Ein neuer Zyklus beginnt. Bei den meisten Schweißgeräten steigt der Schweißstrom in dem Moment steil nach oben an, in welchem der Kurzschluss ausgebildet wird, abhängig von der Induktivität des elektrischen Kreises der Stromquelle. Zündet nun der Lichtbogen im Moment der Tropfenabschnürung bei gleichzeitig hoher Stromstärke wieder entstehen große Mengen Spritzer. In neueren Stromquellen wird ein Abschalten des Lichtbogens vorgenommen, um die Spritzerbildung, die mit der Kurzschlussbildung einhergeht, einzudämmen. Dieses Abschalten erfolgt mittels elektronischer Steuerung.

Beim Fügen wird durch den Lichtbogen lokal Wärme in das Werkstück eingebracht. Dies ist einerseits nötig, um das Werkstück und das Zusatzmaterial zu verflüssigen, ein Schmelzbad entstehen zu lassen und damit nach der Erstarrung eine stoffschlüssige Verbindung vorliegt. Andererseits aber bringt der Wärmeeintrag Probleme mit sich. So treten im Werkstück aufgrund der Temperaturdifferenz Spannungen auf, die zu einem Verzug des Bauteils führen können.

Beim Schweißen von dünnen Werkstücken, insbesondere von dünnen Blechen mit einer Stärke von wenigen Millimetern, wird die Schmelze sehr leicht aus dem Schweißbad geblasen, so dass es zu Löchern kommt.

Auch beim Fügen beschichteter Werkstücke treten Probleme auf, wenn die im Vergleich zum Grundwerkstoff bei niedriger Temperatur verdampfende Beschichtung aufgrund des Wärmeeintrags zu einer Rauchbildung führt und es so zu Einschlüssen und Poren in der Schweißnaht kommt. Die letztgenannten Probleme zeigen sich insbesondere beim Fügen verzinkter Bleche.

Verfahren und Apparate zum Schweißen mit elektronisch gesteuertem Kurzlichtbogen sind beispielsweise in den Druckschriften US 2005/0056629, EP 1 462 207, EP 1 379 354, WO 2005/042199 und WO 2005/051586 erwähnt.

Aus der WO 03/064096 geht ein Verfahren zum Verschweißen von PKW-Elementen hervor. Abhängig von der Metallurgie der Werkstoffe ist bei diesem Verfahren vorgesehen eines der folgenden Schutzgasgemische zu verwenden Ar/CO₂, Ar/CO₂/O₂, Ar/H₂/CO₂, Ar/He/CO₂, Ar/He, Ar/O₂, Ar/He/O₂.

Derartige Argon-basierte Schutzgasgemische haben sich in der Praxis sehr bewährt und sind umfangreich in Gebrauch. Die Hauptkomponente dieser Gemische ist Argon. Der Argonanteil beträgt hierbei zumindest 60% am Gesamtgemisch.

In der EP 1 757 401 A1 ist ein Verfahren zum Lichtbogenfügen beschrieben, bei dem ein Werkstück unter einem Schutzgas mit einer abschmelzenden Elektrode unter Verwendung eines Kurzlichtbogens, bei welchem Material von der abschmelzenden Elektrode an das Werkstück unter Bildung eines elektronisch gesteuerten elektrischen Kurzschlusses übergeben wird. Das Schutzgas besteht aus 50 bis 5000 vpm (0,005 bis 0,5 Vol.-%) Sauerstoff, Kohlendioxyd, Stickstoffmonoxyd, Stickstoff, Distickstoffmonoxyd oder einer Mischung aus diesen Gasen in Argon oder in einer Argon-Helium-Mischung. Bei diesem Verfahren ist Argon notwendiger Bestandteil der Schutzgasmischung, damit die Plasmabildung zügig und stabil einsetzt.

In der GB 1 134 028 A ist ein Verfahren zum Lichtbogenschweißen beschrieben. Das Verfahren ist geeignet um Werkstücke mit einer Dicke von 13 mm bis 25 cm zu bearbeiten. Der Abstand der beiden miteinander zu verbindenden Werkstücke soll relativ gering sein, insbesondere soll der Spalt zwischen 6,4 mm bis 16 mm breit sein. Bei diesem Verfahren wird ein Schutzgas verwendet, das zwischen 10 bis 70 Volumenprozent aus CO₂ und 30 bis 90 Volumenprozent aus Helium besteht. Das Verhältnis CO₂ zu Helium kann 70/30, 20/80, 10/90 betragen. Bei diesem Verfahren soll der Lichtbogen nicht so kurz sein, dass das gesamte Material während des Kurzschlusses übergeben wird.

In der US 2007/0241087 A1 ist ein Verfahren und eine Vorrichtung zum Schweißen, insbesondere zum Ausbilden einer Wurzellage in einem Spalt zwischen zwei beabstandeten Kanten zweier Werkstücke, beschrieben. Als Schutzgas wird zum Beispiel ein Gemisch aus CO₂, Argon und Helium vorgesehen, das Schutzgas kann aus 10% bis 30% CO₂ und 60% bis 90% Argon ausgebildet sein. Dieses Verfahren wird mittels eines Lichtbogens unter Bildung eines elektronisch gesteuerten Kurzschlusses ausgeführt.

Wird CO₂ in einer Schutzgasmischung verwendet beträgt der Anteil des CO₂ maximal 20% üblicherweise weniger als 20%. Zum Beispiel ist in einem Bericht der Schweißtechnischen Lehr und Versuchsanstalt SLV München (SLV-Nr. 5112 600 / 2001) MIG/MAG-Schweißen mit sehr kurzem Lichtbogen zur Steigerung der Abschmelzleistung und Schweißgeschwindigkeit intensiv analysiert worden. Hierbei werden mehrere zur Zeit übliche Standardmischungen von Schutzgasen zum Kurzlichtbogenfügen verwendet, deren Anteil an CO₂ immer kleiner 20% ist.

Beim MAG-Schweißen wird Argon als hauptsächlicher Mischgasanteil (> 50 %) mit zusätzlichen aktiven Komponenten wie z.B. CO₂ und/oder Sauerstoff verwendet. Ebenso ist bekannt dem Argon reduzierende Gase oder andere inerte Gase wie z.B. Helium beizumischen.

Argonreiche Mischgase werden hauptsächlich verwendet, um bei Inertgasanteilen von mindestens 80 % den Impuls- oder Sprühlichtbogen verwenden zu können, was die Produktivität deutlich erhöht und die Schweißspritzer erheblich reduziert.

Seit mehr als 10 Jahre gibt es von verschiedenen Stromquellenherstellern Stromquellen, die das Schweißen mit einem geregelten Kurzlichtbogen ermöglichen. Aufgrund der in diesen Stromquellen verbauten Regelungstechnik ist es möglich im Kurzlichtbogen nahezu spritzerfrei zu schweißen. Zudem kann der Kurzlichtbogen effektiver verwendet werden (z.B. höhere Schweißgeschwindigkeiten).

Nachteilig bei der Verwendung von reinem CO₂ als Schweißschutzgas bei herkömmlichen Schweißverfahren sind allerdings zum Beispiel die stark oxidierte und raue Nahtoberfläche, die ein aufwändiges Säubern und Glätten notwendig macht, sowie die schmale Nahtausbildung, die nur eine geringe Spalttoleranz erlaubt. Dies führt zu erheblichen Mehrkosten bei der Produktion. Weiterhin fördert reines CO₂ die Tropfengröße, wodurch die Spritzerneigung steigt.

Aufgabe der vorliegenden Erfindung ist es daher, ein kostengünstiges Verfahren bereitzustellen, das ein stabiles zuverlässiges Fügen mit geregeltem Kurzlichtbogen erlaubt, das deshalb einfach automatisierbar ist und bei dem qualitativ hochwertige Schweißnähte und Lötverbindungen entstehen.

Die Aufgabe wird erfindungsgemäß dadurch gelöst, dass ein Verfahren zum Lichtbogenfügen eines Werkstücks unter einem Schutzgas mit einer abschmelzenden Elektrode unter Verwendung eines Kurzlichtbogens bereitgestellt wird, bei welchem Material von der abschmelzenden Elektrode an das Werkstück unter Bildung eines geregelten Kurzschlusses übergeben wird, wobei das Schutzgas 80 bis 95 Vol.-% CO₂ und bevorzugt 85 bis 90 Vol.-% CO₂ umfasst.

Durch die elektronische Regelung wird im Vergleich zu einem gesteuertem Kurzschlussstrom der Kurzschlussstrom verringert, so dass der Wärmeeintrag in das Werkstück zurückgeht und sehr präzise eingestellt werden kann. Ferner wird mit der elektronischen Regelung die Abruptheit, mit welcher die Kurzschlussbrücke reißt und der Materialübergang stattfindet, abgemildert, so dass die Schweißspritzer deutlich abnehmen. Die elektronische Regelung betrifft dabei meist die Strom- und Spannungswerte. Teilweise wird auch die Drahtförderung in die Regelung mit einbezogen.

Es hat sich überraschend gezeigt, dass mit einem Schutzgas mit einem Anteil von 80 bis 95 Vol.-% CO₂ und bevorzugt 85 bis 90 Vol.-% CO₂, ein sehr stabiler Fügevorgang erzielt wird, mit welchem Fügeverbindungen hoher Qualität erzielt werden. CO₂ ist ein im Vergleich zu den weiteren üblichen Bestandteilen der Schutzgase sehr kostengünstiges Gas. Der hohe Anteil von CO₂ macht die gesamte Schutzgaszusammensetzung sehr günstig. Bisher wurden zum automatisierten Fügen mit Kurzlichtbogen lediglich Schutzgase mit sehr geringem Anteil von CO₂ eingesetzt. Die Erfinder haben überraschend festgestellt, dass bei geregeltem Kurzschluss auch ein Schutzgas mit hohem CO₂-Anteil eingesetzt werden kann, das im wesentlichen die gleichen Ergebnisse liefert, wie die bisher hierfür verwendeten wesentlich teureren Schutzgase.

Zudem kann mit den geregelten Stromquellen der Kurzlichtbogen effektiver verwendet werden d.h. der Schweißvorgang kann, unter Verwendung eines Schutzgases mit 80 bis 95 Vol.-% CO₂ und bevorzugt mit 85 bis 90 Vol.-% CO₂, bei Schweißgeschwindigkeiten von 1 m/min bis 1,5 m/min bzw. bis 2 m/min und sogar von bis zu 2,5 m/min ausgeführt werden.

Mit dieser Schutzgaszusammensetzung ist ein spritzerfreies Schweißen möglich.

Mit dem erfindungsgemäßen Verfahren wird somit eine hohe Produktivität erzielt, da durch das spritzerfreie Fügen eine Nachbearbeitung der Schweiß- und Lötverbindungen entfällt und zudem mit einer relativ hohen Geschwindigkeit bearbeitet werden kann.

In einer weiteren Ausführungsform des erfindungsgemäßen Verfahrens enthält das Schutzgas zusätzlich zum CO₂ 5 bis 20 Vol.-% und vorzugsweise 15 bis 10 Vol.-% Helium und/oder Stickstoff.

Durch die Verwendung von CO₂ unter Beimischung von Helium und/oder Stickstoff lässt sich die Schweißgeschwindigkeit deutlich steigern, die Spalttoleranz wird verbessert und bessere Nahtoberflächen können bereitgestellt werden. Diese Effekte sind vor allem bei der Beimischung von Helium stark ausgeprägt, da Helium im Vergleich zu CO₂ eine wesentlich höhere Wärmeleitfähigkeit aufweist. Dadurch ist eine schnellere Wärmeüber- und Ableitung möglich. Je mehr Helium in der Schutzgasmischung enthalten ist desto dickere Tropfen bilden sich beim Schweißen. Je dicker die Tropfen sind, desto größer können auch die Spalte sein, die mit der Schweißnaht geschlossen werden. Dadurch sorgt das in der Schutzgasmischung enthaltene Helium für eine bessere Spaltüberbrückung. Somit ist eine höhere Toleranz bei der Fertigung möglich. Durch die bessere Spaltüberbrückung und die glatteren Nahtoberflächen bei Verwendung der erfindungsgemäßen Schutzgasmischung lässt sich die Produktion erheblich optimieren und steigern.

Außerdem bewirkt der Einsatz von Helium schönere Nähte, da die Nahtüberwölbung die sich z.B. bei Verwendung von reinem CO₂ zeigt deutlich vermindert wird. Dieser Effekt ist bei der Verwendung von Stickstoff an Stelle von Helium nur gering ausgeprägt.

Insbesondere bei der industriellen Massenproduktion kommen die Vorteile der erfindungsgemäßen Schutzgasmischung zum Tragen. Bei Fertigungsstrassen, in denen vollautomatisierte Roboter verwendet werden, bringen schon kleinste Toleranzsteigerungen erhebliche wirtschaftliche Vorteile. Dies beginnt schon bei der Vorbereitung der zu verschweißenden Werkstücke. Je größer die Toleranz ist desto schneller und kostengünstiger können die Werkstücke bereitgestellt werden. Auch ist es bisher sehr kosten- und zeitintensiv die Spann- und Haltewerkzeuge in den Fertigungsstrassen derart präzise einzustellen, dass sie im Toleranzbereich arbeiten. Die ist nun ebenfalls schneller und kostengünstiger möglich. Größere Toleranzen bewirken vor allem weniger kostenintensive Ausfallzeiten an der Fertigungsstraße.

Mit dem erfindungsgemäßen Verfahren unter Zusatz von Helium werden beim Schweißen dickere Tropfen bereitgestellt, dies ermöglicht eine größere Spalttoleranz, höhere Schweißgeschwindigkeiten und glattere, sauberere Schweißnähte. Je größer die Spalttoleranz ist desto effektiver, schneller und kostengünstiger kann bei automatisierten Prozessen gearbeitet werden. Auch die oft notwendigen Abschaltungen zum nachjustieren der Werkzeuge, um eine geringe Toleranz einzuhalten, werden vermieden. Somit trägt das erfindungsgemäße Verfahren entscheidend dazu bei die Fertigungskosten zu senken und die Produktivität zu steigern.

Zudem verbessert sich aufgrund des hohen Wärmeeintags von Helium das Fließverhalten des Fügematerials.

In einer weiteren Ausführungsform kann dem im erfindungsgemäßen Verfahren eingesetzten Schutzgas auch 5% bis 20% und vorzugsweise 10% bis 15% Argon zugemischt werden.

Durch die Zugabe von Argon werden in der Regel kleinere Tropfen bereitgestellt, die mit einer hohen Fequenz abgegeben werden wodurch ebenfalls hohe Schweißgeschwindigkeiten von 1 m/min bis 1,5 m/min bzw. bis 2 m/min und sogar von bis zu 2,5 m/min erreicht werden.

Durch den geringeren Wärmeeintrag des beigemischten Argons im Vergleich zu Helium wird ein Verzug der Bauteile auch beim Bearbeiten von dünneren Materialien vermieden.

Ein Anteil Helium ist aufgrund der guten Wärmeleitfähigkeit des Heliums bevorzugt. Helium und Argon sind bzgl. der Wärmeleitfähigkeit gegensätzlich in ihrer Wirkung, so dass in der Regel entweder Helium oder Argon als Zusatz zu CO₂ verwendet wird. Eine Schutzgasmischung mit Helium und Argon ist nur in Ausnahmefällen sinnvoll,

Im folgenden wird das erfindungsgemäße Verfahren erläutert.

Der Kurzlichtbogen bietet gegenüber allen anderen Lichtbogenformen des Metallschutzgasschweißens (MSG-Schweißen) den Vorteil der geringstmöglichen Wärmeeinbringung. Das bedeutet nicht nur Vorteile bezüglich der meist gewünschten Minimierung von Wärmeeinbringung und Verzug, sondern auch bezüglich Spritzerbildung. Zahl und Größe der Schweißspritzer können durch Optimierung der Stromquellendynamik, der Schweißparameter und Stromform meist auf eine als unbedeutend einzustufende Größe reduziert werden. Dies wird durch Programmierung steilflankiger Stromimpulse kurzer Dauer (Kurzschlußphase) und Anpassung der Lichtbogenleistung entsprechend dem Wärmebedarf der jeweiligen Schweißaufgabe (Lichtbogenphase) erreicht. Zusammen mit den verfahrensbedingten Vorteilen des MSG-Schweißens (wie z.B. Positions- und Richtungsunabhängigkeit) ist der Hochleistungs-Kurzlichtbogen insbesondere für automatisiertes Schweißen in der industriellen Fertigung geeignet.

Das erfindungsgemäße Verfahren ist somit besonders gut automatisierbar.

Als Stromquellen können z.B. die SAPROM 905 der Firma Lorch oder die GLC 503 von der Firma Quinto vorgesehen sein. Die Stromform des Schweißstroms hat Einfluss auf verschiedene für den Schweißprozess bedeutende Größen, wie die übertragbare elektrische Leistung, die Geräuschemission und die Tropfenablösung an der Drahtelektrode. Eine günstige Stromform wird vorzugsweise nicht durch programmierte Stromimpulse gleicher Dauer erreicht sondern durch eine Steuer bzw. Regelung, die in Abhängigkeit vom Vorhandensein einer Kontaktierung den softwareseitig vorbestimmten Kurzschlussstrom steuert. Ein entsprechender Regler in Verbindung mit einer hohen Taktfrequenz gewährleistet am Ende der Kurzschlussphase einen schnellen Stromabfall auf den deutlich geringeren Lichtbogenstrom (wodurch in Verbindung mit dem erfindungsgemäßen Verfahren die Spritzerbildung minimiert wird?).

Beim erfindungsgemäßen Verfahren wird die Programmierung der einzelnen Parameter (wie Lichtbogenstrom und -Spannung, Stromanstieg, Kurzschlußstrom etc.) entweder per Maschinendisplay (direkt an der Maschine) realisiert oder über einen angekoppelten Standard-PC mit maschinenbezogener und somit herstellerspezifischer Software. Beim mechanisierten Schweißen mit dem Kurzlichtbogen kann auf diese Weise die Wärmeeinbringung unabhängig von der Tropfenablösung programmiert werden. Die Kurzschlußphase ist maßgeblich für die Tropfenablösung verantwortlich, wogegen in der Lichtbogenphase die Wärmeeinbringung sehr gut beeinflussbar ist.

Beim erfindungsgemäßen Verfahren kann eine Stromquelle vorgesehen sein, die eine Kurzschlußbehandlung mit steilflankigen Stromimpulsen bereitstellt. Ein steiler Stromabfall nach dem Erreichen des Schweißstrommaximums bringt eine deutliche Abnahme der Schweißspritzer.

Beim erfindungsgemäßen Verfahren kann auch eine Stromquelle vorgesehen sein, die eine Kurzschlußbehandlung mit sägezahnförmigem Stromverlauf bereitstellt. In diesem Fall ist eine hohe Stromanstiegsgeschwindigkeit vorgesehen.

In der Lichtbogenphase kann durch geringe Wärmeeinbringung mit Strömen, von z.B. 150 A, bewirkt werden, dass der sich in der nächsten Kurzschlußphase ablösende Tropfen möglichst klein wird. Das hat den Vorteil, dass die Kurzschlußfrequenz ansteigt und die kinetische Energie des einzelnen Tropfens geringer ist. Die geringere kinetische Energie der Tropfen führt beim Übergang in das Schweißbad dazu, dass weniger bzw. bei optimaler Einstellung des Schweißprozesses keine Schweißspritzer aus dem Schmelzbad geschleudert werden

Schweißspritzer können durch Optimierung der Stromquellendynamik, der Schweißparameter und Stromform in Verbindung mit dem erfindungsgemäßen Verfahren vermieden werden. Dies wird in der Regel durch steilflankige Stromimpulse kurzer Dauer (Kurzschlussphase) und Anpassung der Lichtbogenleistung an den Wärmebedarf der jeweiligen Schweißaufgabe realisiert.

Vorzugsweise ist beim erfindungsgemäßen Verfahren die Elektrode plusgepolt, d.h. sie weist eine positive Polung auf. Auf diese Weise wird die Raupenformung begünstigt, es kommt zu einem kathodischen Reinigungseffekt und Spritzer werden vermieden.

Vorzugsweise wird das erfindungsgemäße Verfahren mit einer Elektrode ausgeführt, die eine Drahtstärke von 0,6 mm bis 1,2 mm und bevorzugt 1,0 mm bis 1,2 mm aufweist.

Durch die positive Polung und die verwendete Drahtdicke werden qualitativ hochwertige Fügeverbindungen bei zugleich hoher Produktivität bereitgestellt.

Bei der Bearbeitung von besonders dünnen Bauteilen kann auch eine negative Polung der Drahtelektrode vorgesehen sein, die eine geringere Wärmeeinbringung in die Bauteile bewirkt, wodurch Beschädigungen an den Bauteilen bzw. Fehler in der Fügeverbindung vermieden werden.

Insbesondere ist das erfindungsgemäße Verfahren zum Ausbilden von Kehlnähten am Überlapp und T-Stoß ausgebildet, da bei diesen Fügeverbindungen eine hohe Wärmeeinbringung erforderlich ist. Der Zusatz von Helium bewirkt ein besseres fliessen des Fügematerials und einen tieferen breiteren Einbrand.

Dadurch, dass immer genügend CO₂ im Schutzgas enthalten ist, setzt die Plasmabildung zügig und stabil ein. Sind weniger als 5 Vol.-% Helium im Schutzgas enthalten, dann wird ein auf die hohe Wärmeleitfähigkeit des Heliums zurückzuführender Einfluss auf den Schweißprozess kaum bemerkt. Bevorzugt ist im Schutzgas 5 bis 20 Vol.-% Helium enthalten, ganz bevorzugt 10 bis 15 Vol.-%. Bei diesen Heliumanteilen zeigen sich diese, auf das Helium zurückzuführenden Eigenschaften des Schutzgases besonders ausgeprägt. Hieraus ergibt sich der beste Kosten/Nutzen Ertrag. In einer weiteren bevorzugten Ausführungsform des erfindungsgemäßen Verfahrens enthält das Schutzgas 15 - 20 Vol.-% Helium in CO₂. Hieraus ergeben sich die größten Vorteile bezüglich der Überbrückung von Spalten.

Das Helium reduziert die Nahtüberwölbung, die durch das CO₂ im Schutzgas hervorgerufen wird und verbessert bzw. verringert die Rauhigkeit der Nahtoberfläche.

Das Helium unterstützt mit seiner hohen Wärmeleitfähigkeit die einsetzende Metalldampfplasmabildung des Materials. Durch die Verwendung von Helium lässt sich das Plasma und somit die Einschweißtiefe besser kontrollieren.

Bei Verwendung von Helium in der Schutzgasmischung ist es zweckmäßig die Schweißspannung relativ hoch einzustellen, wodurch eine Erwärmung des Bauteils bewirkt wird und der schmelzflüssige Werkstoff sehr gut fließt und benetzt. Es ist daher möglich schneller zu Schweißen als ohne Helium, so dass die eingebrachte Streckenenergie im Vergleich zur Schweißung unter reinem CO₂ sogar nochmals abnimmt. Bauteilspannungen und/oder-verzug können so weiter reduziert werden.

Der Anteil von Helium im Schutzgas erfordert bei gleicher Lichtbogenlänge wie ohne Helium eine erhöhte Lichtbogenspannung. Der vergleichsweise heißere Lichtbogen führt zu einer breiteren und damit flacheren Naht. Der Einbrand wird dadurch runder und tiefer. Dies erlaubt höhere Schweißgeschwindigkeiten und gewährleistet das sichere Durchschweißen im Wurzelbereich.

Zudem verbessert das Helium die Entgasungsbedingungen und verhindert so die Porenbildung.

Durch die oben beschriebenen Eigenschaften des Schutzgases wird der gesamte Fügeprozess deutlich stabiler und damit besser beherrschbar. Infolgedessen wird die Schweiß- beziehungsweise Lötnaht gleichmäßig mit dem Zusatzmaterial gefüllt, eine gleichbleibende Raupe wird erzeugt und auch die Porenhäufigkeit wird deutlich herabgesetzt. Diese Vorteile stellen sich auch bei höheren Bearbeitungsgeschwindigkeiten ein von bis zu 2,5 m/min ein, welche bisher nur sehr schlecht beherrschbar waren.

Die eben beschriebenen Effekte tragen dazu bei unter Verwendung eines Kurzlichtbogens, bei welchem Material von der abschmelzenden Elektrode an das Werkstück unter Bildung eines geregelten Kurzschlusses übergeben wird, mit hoher Produktivität zu Fügen. Auf Grund des hohen CO₂-Anteils von zumindest 80% im Schutzgas ist das Verfahren dennoch sehr kostengünstig auszuführen. Ein Anteil von Helium von mehr als 20% ist nur in Ausnahmefällen vorgesehen, um eine kostengünstige Schutzgasmischung bereitzustellen.

Das erfindungsgemäße Verfahren ist mit dem Hochleistungs-Kurzlichtbogen ausführbar.

Beim erfindungsgemäßen Verfahren ist in der Regel eine hohe Tropfenfrequenz vorgesehen, um einen quasi-kontinuierlichen Materialübergang zu gewährleisten. Dies gilt sowohl für eine Schutzgaszusammensetzung bei der große Tropfen bereitgestellt werden als auch für die kleineren Tropfen. Durch den quasi-kontinuierlichen Materialübergang sind hohe Schweißgeschwindigkeiten erzielbar und ein hohe Produktivität, insbesondere in der automatisierten Fertigung, ist gewährleistet.

In einer weiteren bevorzugten Ausführungsform können dem im erfindungsgemäßen Verfahren eingesetzten Schutzgasgemisch auch Sauerstoff, Kohlendioxid, Stickstoffmonoxid, Stickstoff, Distickstoffmonoxid oder eine Mischung aus zweien oder mehreren dieser Gase in einer Menge von bis zu 2000 ppm als Dotierung beigemischt werden.

Die verbesserten Schweißeigenschaften sind auf die Eigenschaften der verwendeten Schutzgasmischung zurückzuführen. Das in der Schutzgasmischung als Dotiergas enthaltene Sauerstoff, Stickstoffmonoxid, Stickstoff, Distickstoffmonoxid in Verbindung mit dem Kohlendioxid lagert sich an der Oberfläche des Werkstücks an. An diesen Stellen kommt es zu einer Feldüberhöhung des elektrischen Feldes, das durch das Anlegen der Schweißspannung zwischen Elektrode und Werkstück entsteht. An diesen Stellen beginnt nun die Plasmabildung.

Zuerst ionisiert nur das Helium. Durch die bei der lonisation frei werdenden Elektronen beginnt der Lichtbogen zu brennen, wodurch sich der Energieeintrag stark erhöht. Nun verdampft Werkstückmaterial und das verdampfte Material ionisiert. Da das Material im Vergleich zum Helium leichter ionisiert, nimmt die Elektronenemission sehr stark zu und der Lichtbogen brennt nun stabil. Durch die begrenzt vorhandene Dotierung von bis zu 2000 ppm bilden sich vereinzelte Inseln aus angelagertem Dotiergas in ausreichender Zahl, um die Plasmabildung zügig und stabil einsetzen zu lassen. Anderseits ist bei dieser Dotierung die Konzentration der Dotiergase so gering, dass kein unerwünschten metallurgischen Effekte auftreten.

Bevorzugt enthält das Schutzgas 200 bis 600 vpm (0,02 bis 0,06 Vol.-%) Sauerstoff, Stickstoffmonoxid, Stickstoff, Distickstoffmonoxid oder eine Mischung aus zweien oder mehreren dieser Gase. Mit dieser Dotierung wird die Wiederzündfähigkeit nach erfolgtem Kurzschluss besonders vorteilhaft unterstützt.

Die erfindungsgemäße Schutzgasmischung ist durch den hohen CO₂-Anteil sehr günstig und sehr leistungsfähig. Daher ist das erfindungsgemäße Verfahren aufgrund seiner Vorteile besonders gut in der Automobilindustrie einsetzbar.

Das erfindungsgemäße Verfahren ist zum Schweißen von unlegiertem Stahl geeignet, dies umfasst auch unlegierte Stähle für besondere Anwendungen, wie z.B. warmfeste, hochfeste, Werkzeug-, Vergütungs- oder Feinkornstähle und beschichtete (z.B. elektrolytisch oder schmelztauch verzinkte, aluminierte oder mit einer organischen Schutzschicht versehene) Stähle.

Das erfindungsgemäße Verfahren zeigt seine Vorteile auch, wenn Werkstücke mit einer Dicke von weniger als 5 mm, vorzugsweise von weniger als 3 mm verfügt werden. So werden auch bei dünnen Blechen mit Wandstärken von weniger als 1,0 mm Fügeverbindungen ohne die Gefahr von Durchschweißungen erreicht. Mit dem erfindungsgemäßen Verfahren können Werkstücke mit einer geringen stärke von bis zu 0,5 mm verarbeitet werden. Bei noch dünneren Blechen ist es zweckmäßig an Stelle von Helium Argon zu verwenden oder den durch Helium erzielten höheren Wärmeeintrag durch Argon zu begrenzen. Dies ist natürlich in Verbindung mit der Schweißgeschwindigkeit einzustellen wobei je höher die Schweißgeschwindigkeit ist desto geringer ist der Wärmeeintrag.

In einer anderen vorteilhaften Ausgestaltung der Erfindung werden Werkstücke aus Stahllegierungen verschweißt. Auch bei diesen Werkstoffen zeigen sich die Vorteile des erfindungsgemäßen Verfahrens. Insbesondere ist das Verfahren für nichtrostende Stähle geeignet. Nichtrostende Stähle weisen einen Anteil von etwa 13% Chrom auf, der im austenitischen oder ferritischen Mischkristall gelöst sein muss. Nichtrostende Stähle können auch Legierungsbestandteile wie Nickel, Molybdän, Mangan und Niob aufweisen.

## Patentansprüche

1. Verfahren zum Lichtbogenfügen eines Werkstücks unter einem Schutzgas mit einer abschmelzenden Elektrode unter Verwendung eines Kurzlichtbogens, bei welchem Material von der abschmelzenden Elektrode an das Werkstück unter Bildung eines geregelten Kurzschlusses übergeben wird, **dadurch gekennzeichnet, dass** das Schutzgas 80 bis 95 Vol.-% CO₂ und bevorzugt 85 bis 90 Vol.-% CO₂ umfasst.

2. Verfahren nach Anspruch 1, **dadurch gekennzeichnet, dass** das Schutzgas 5 bis 20 Vol.-% Helium und/oder Stickstoff enthält.

3. Verfahren nach einem der Ansprüche 1 bis 2, **dadurch gekennzeichnet, dass** Werkstücke mit einer Dicke von weniger als 5 mm, vorzugsweise von weniger als 3 mm gefügt werden.

4. Verfahren nach einem der Ansprüche 1 bis 3, **dadurch gekennzeichnet, dass** Auftragschweißungen oder Reparaturschweißungen z.B. an Werkzeugstählen durchgeführt werden.

5. Verfahren nach einem der Ansprüche 1 bis 4, **dadurch gekennzeichnet, dass** Werkstücke aus Stahllegierungen verschweißt werden.

6. Verfahren nach einem der Ansprüche 1 bis 5, **dadurch gekennzeichnet, dass** die abschmelzende Elektrode eine Drahtstärke von 0,6 mm bis 1,2 mm und bevorzugt 1,0 mm bis 1,2 mm aufweist.

7. Verfahren nach einem der Ansprüche 1 bis 6, **dadurch gekennzeichnet, dass** die Elektrode positiv gepolt ist.

8. Verfahren nach einem der Ansprüche 1 bis 7, **dadurch gekennzeichnet, dass** beim Lichtbogenfügen Überlapp- und Kehlnähte ausgebildet werden.

9. Verfahren nach einem der Ansprüche 1 bis 8, **dadurch gekennzeichnet, dass** das Verfahren in der Automobilindustrie eingesetzt wird.

10. Verfahren nach Anspruch 1, **dadurch gekennzeichnet, dass** das Schutzgas ein CO₂-Helium-Gemisch ist.

11. Verfahren nach einem der Ansprüche 1 bis 10, **dadurch gekennzeichnet, dass** Auftragschweißungen oder Reparaturschweißungen z.B. an Werkzeugstählen durchgeführt werden

12. Verfahren nach einem der Ansprüche 1 bis 11, **dadurch gekennzeichnet, dass** 5 bis 20 Vol.-% Argon enthält.

13. Verfahren nach einem der Ansprüche 1 bis 12, **dadurch gekennzeichnet, dass** das Schweißen mit einer Geschwindigkeit von 1 bis 1,5 m/min und insbesondere mit bis zu 2 m/min ausgeführt wird.

14. Verwendung eines Schutzgases zum Lichtbogenfügen gemäß einem der Ansprüche 1 bis 13,
**dadurch gekennzeichnet,**
**dass** das Schutzgas 80 bis 95 Vol.-% CO₂ und bevorzugt 85 bis 90 Vol.-% CO₂ umfasst und 5 bis 20 Vol.-% Helium umfasst.

15. Verwendung eines Schutzgases zum Lichtbogenfügen gemäß einem der Ansprüche 1 bis 8,
**dadurch gekennzeichnet,**
**dass** das Schutzgas 80 bis 95 Vol.-% CO₂ und 5 bis 20 Vol.-% Helium umfasst.
